# EUROPEAN PATENT APPLICATION

(11) **EP 1 895 611 A1**
(43) Date of publication of application: **05.03.2008**
(21) Application number: 07114953.8
(22) Date of filing: 24.08.2007
(51) Int. Cl.: H01M 2/10

(54) **Battery device, electronic apparatus, and battery system cross references to related applications**

(30) Priority: 28.08.2006 JP 2006230796
(71) Applicant: Sony Corporation, Minato-ku Tokyo 108-0075 (JP)
(72) Inventor: Hara, Mieko, Tokyo (JP); Takeshita, Toshio, Tokyo (JP); Miyajima, Yoichi, Tokyo (JP); Watanabe, Tomonori, Tokyo (JP)
(74) Representative: Körber, Martin Hans

(57) **Abstract**

Disclosed is a battery device including a first battery device and a second battery device each having a battery enclosure incorporating a battery cell. The battery device further includes an output terminal that outputs power of the battery cell. IThe battery enclosure includes a first surface, a second surface, a first step surface, a second step surface, a first engaging portion, a second engaging portion, a first groove, and a second groove. The first battery device and the second battery device are formed such that a shape of at least one of the first engaging portion and the second engaging portion differs between the first battery device and the second battery device.

## Description

The present invention contains subject matter related to Japanese Patent Application JP 2006-230796 filed in the Japanese Patent Office on August 28, 2006, the entire contents of which being incorporated herein by reference.

### BACKGROUND OF THE INVENTION

### Field of the Invention

The present invention relates to a battery device used as a portable power source, an electronic apparatus in which the battery device is detachably mounted and used, and a battery system including a combination of the electronic apparatus with the battery device.

### Description of the Related Art

Japanese Unexamined Patent Application Publication No. 2000-243365 discloses an example of a battery device of the related art as a portable power source. Japanese Unexamined Patent Application Publication No. 2000-243365 discloses a battery pack in which a rechargeable battery cell used as a power source for an electronic apparatus is stored; a battery mounting device on which the battery pack is mounted; and an electronic apparatus including a battery mounting mechanism on which the battery pack is mounted. The battery pack disclosed in Japanese Unexamined Patent Application Publication No. 2000-243365 includes "a battery cell; a case in which the battery cell is stored; an output terminal which is provided in the case and outputs power of the battery cell; and a second surface of the case which is provided continuously with a first surface of the case having the output terminal and provided approximately perpendicular to the first surface, where a recess is formed with a plurality of steps in an approximate center of the second surface".

It may be expected that the battery pack having such a configuration may be prevented from being inappropriately mounted on a battery mounting device which is supposed to be incompatible (paragraph [0161] of the specification), for example.

Japanese Unexamined Utility Model Application Publication No. 2005-190929 discloses another example of a battery device of the related art. Japanese Unexamined Utility Model Application Publication No. 2005-190929 discloses a battery device and an electronic apparatus operated using the battery device. The battery device disclosed in Japanese Unexamined Utility Model Application Publication No. 2005-190929 includes "a case having a width, a thickness, and a length; a rechargeable battery provided in the case; and a battery side terminal provided on a surface of the case and connected to the rechargeable battery, where the battery device is inserted in the length direction into a battery housing chamber of an electronic apparatus and the battery side terminal is connected to a housing chamber side terminal of the battery housing chamber. A guide groove is formed on each side of the case in the crosswise direction, where the guide groove extends in the length direction and is engaged with a protrusion provided in the battery housing chamber to position the case in the thickness direction in the battery housing chamber".

According to the battery device having such a configuration, it may be expected that "since a guide groove is formed on each side of the case in the crosswise direction of the battery device, where the guide groove extends in the length direction and is engaged with a protrusion provided in the battery housing chamber to position the case in the thickness direction in the battery housing chamber, it is possible to store, in the battery housing chamber, multiple types of battery devices different in thickness of the case, that is, different in volume" (paragraph [0005] of the specification).

However, each of the battery devices disclosed in Japanese Unexamined Patent Application Publication No. 2000-243365 and Japanese Unexamined Utility Model Application Publication No. 2005-190929 is formed as an exclusive component that may be mounted only in mounting portions having a specific configuration of an electronic apparatus. Therefore, one battery device may be used only for an electronic apparatus having mounting portions for the battery device, and it may be necessary to separately prepare, for another type of an electronic apparatus including mounting portions having a different configuration, a battery device for the electronic apparatus.

Further, in order to discriminate a type of the battery device of the related art different in a power capacity, a property, and others, a groove or recess is provided in a battery enclosure and an engaging portion or projection for the groove or recess is provided in mounting portions of an electronic apparatus to discriminate the type of the battery device depending on whether or not an engagement is appropriate between the groove or recess of the battery enclosure and the engaging portion or projection of the electronic apparatus. According to the system of discriminating a type of the battery device of the related art, when a new battery device is developed, since a new groove or recess is frequently provided in the battery enclosure and an engaging portion or projection for the groove or recess in the mounting portions of the electronic apparatus the battery enclosure and the mounting portions inevitably include complicated structures.

### SUMMARY OF THE INVENTION

One battery device according to the related art may be used only for an electronic apparatus having mounting portions for the battery device, and a battery device for the electronic apparatus may separately be prepared for another type of an electronic apparatus including mounting portions having a different configuration, resulting in inefficient cost performance.

According to an embodiment of the present invention, there is provided a battery device including a first battery device and a second battery device, each having an approximately rectangular parallelepiped battery enclosure into which a battery cell is incorporated, and an output terminal located so as to expose an output portion of the output terminal in an approximate center of at least a first surface of the battery enclosure and outputs power of the battery cell in a crosswise direction. The battery enclosure of the battery device has a second surface, a first step surface, a second step surface, a first engaging portion, a second engaging portion, a first groove, and a second groove. The second surface is approximately perpendicular to the first surface. The first step surface is provided continuously with and approximately parallel to the second surface with a predetermined step on one side of the second surface in the crosswise direction. The second step surface is provided continuously with and approximately parallel to the second surface having a predetermined step on one side of the second surface in the crosswise direction. The first engaging portion protrudes with predetermined width and thickness to one side from the second surface in the crosswise direction. The second engaging portion protrudes with predetermined width and thickness to the other side from the second surface in the crosswise direction. The first groove is formed with the first step surface and the first engaging portion. The second groove is formed with the second step surface and the second engaging portion. The most important feature is that the first battery device and the second battery device are formed so that a shape of at least one of the first engaging portion and the second engaging portion differs between the first battery device and the second battery device.

According to an embodiment of the present invention, there is provided an electronic apparatus in which a first battery device and a second battery device are selectively mounted, the electronic apparatus including: mounting portions on which a battery device is detachably mounted having an approximately rectangular parallelepiped battery enclosure into which a battery cell is incorporated; and a connection terminal which is placed to expose a connection portion in an approximate center of at least a first surface in a crosswise direction of the mounting portions and is detachably connected to an output terminal that outputs power of the battery cell of the battery device. The mounting portions of the electronic apparatus has: a second surface approximately perpendicular to the first surface, a first hook provided at a predetermined interval from the second surface and detachably engaged with a first engaging portion provided in the battery enclosure; and a second hook provided at a predetermined interval from the second surface and detachably engaged with a second engaging portion provided in the battery enclosure. At least one of the first hook and the second hook is formed to be engageable with each of the first engaging portion and the second engaging portion of each of the first battery device and the second battery device formed so that a shape of at least one of the first engaging portion and the second engaging portion differs between the first battery device and the second battery device.

According to an embodiment of the present invention, there is provided a battery system including a combination of a battery device having a battery cell with an electronic apparatus having mounting portions on which the battery device is detachably mounted.

The battery device has: an approximately rectangular parallelepiped battery enclosure into which a battery cell is incorporated; and an output terminal that is located to expose an output portion of the output terminal in an approximate center of at least a first surface of the battery enclosure and outputs power of the battery cell in a crosswise direction.

The electronic apparatus is an electronic apparatus in which a first battery device and a second battery device are selectively mounted, the electronic apparatus having a connection terminal which is placed to expose a connection portion in an approximate center of at least an electronic apparatus side first surface of the mounting portions in a crosswise direction and is detachably connected to the output terminal.

The battery enclosure has a battery side second surface, a first step surface, a second step surface, a first engaging portion, a second engaging portion, a first groove, and a second groove. The battery side second surface is approximately perpendicular to the battery side first surface. The first step surface is provided continuously with and approximately parallel to the battery side second surface with a predetermined step on one side of the battery side second surface in the crosswise direction. The second step surface is provided continuously with and approximately parallel to the battery side second surface with a predetermined step on the other side of the battery side second surface in the crosswise direction. The first engaging portion protrudes with predetermined width and thickness to one side from the battery side second surface in the crosswise direction. The second engaging portion protrudes with predetermined width and thickness to the other side from the battery side second surface in the crosswise direction. The first groove is formed with the first step surface and the first engaging portion. The second groove is formed with the second step surface and the second engaging portion.

The first battery device and the second battery device are formed so that a shape of at least one of the first engaging portion and the second engaging portion differs between the first battery device and the second battery device.

The mounting portions has: an electronic apparatus side second surface approximately perpendicular to the electronic apparatus side first surface; a first hook provided at a predetermined interval from the electronic apparatus side second surface and detachably engaged with a first engaging portion provided in the battery enclosure; and a second hook provided at a predetermined interval from the electronic apparatus side second surface and detachably engaged with a second engaging portion provided in the battery enclosure.

At least one of the first hook and the second hook is formed to be engageable with each of the first engaging portion and the second engaging portion of each of the first battery device and the second battery device formed so that a shape of at least one of the first engaging portion and the second engaging portion differs between the first battery device and the second battery device.

A battery device according to an embodiment of the present invention may be commonly used for multiple types of electronic apparatuses that include mounting portions having a relatively small difference but having a common basic configuration between them, and hence the battery device may be effectively utilized. In an electronic apparatus according to an embodiment of the present invention, no separate battery devices may be used for different types of the electronic apparatuses and thus one battery device may be commonly used for the different types of the electronic apparatuses, since the battery device mounted on mounting portions to supply power may be used for multiple types of the electronic apparatus. Further, a battery system according to an embodiment of the present invention including the battery device and the electronic apparatus in combination described above may provide a unit system having advantages of the battery device and the electronic apparatus, respectively.

### BRIEF DESCRIPTION OF THE DRAWINGS

FIG. 1 shows a first example of a battery device according to an embodiment of the present invention, where FIG. 1A is a bottom oblique view and FIG. 1B is a bottom view.
FIG. 2 shows a first example of a battery device according to an embodiment of the present invention, where FIG. 2A is a left side view and FIG. 2B is a plan view.
FIG. 3 shows a first example of a battery device according to an embodiment of the present invention, where FIG. 3A is a front view, FIG. 3B is a rear view, and FIG. 3C is a D-D line cross-sectional view of FIG. 2A.
FIG. 4 is a front oblique view of a digital video camera as a specific example of an imaging device shown as an example of an electronic apparatus according to an embodiment of the present invention.
FIG. 5 is a rear oblique view of a digital video camera as a specific example of an imaging device shown as an example of an electronic apparatus according to an embodiment of the present invention.
FIG. 6 is a rear view of a digital video camera as a specific example of an imaging device shown as an example of an electronic apparatus according to an embodiment of the present invention.
FIG. 7 is an oblique view of a rear panel having mounting portions of the digital video camera shown in FIG. 4.
FIG. 8 is an exploded oblique view of a rear panel having mounting portions, a slide member, and a cover member of the digital video camera shown in FIG. 4.
FIG. 9 shows the rear panel shown in FIG. 7 and others, where FIG. 9A is a front view of the rear panel, FIG. 9B is a view describing an initial state during mounting a battery device in the mounting portions of the rear panel, and FIG. 9C is view describing a state after mounting the battery device.
FIG. 10 is an oblique view showing a second example of a rear panel having mounting portions of an imaging device shown as an example of an electronic apparatus according to an embodiment of the present invention.
FIG. 11 shows the rear panel shown in FIG. 10 and others, where FIG. 11A is a front view of the rear panel, FIG. 11B is a view describing an initial state during mounting a battery device in the mounting portions of the rear panel, and FIG. 11C is view describing a state after mounting the battery device.
FIG. 12 shows a second example of a battery device according to an embodiment of the present invention, where FIG. 12A is a left side view, FIG. 12B is a bottom view, and FIG. 12C is a right side view.
FIG. 13 shows a third example of a battery device according to an embodiment of the present invention, where FIG. 13A is a left side view, FIG. 13B is a bottom view, and FIG. 13C is a right side view.
FIG. 14 is a bottom oblique view showing a fourth example of a battery device according to an embodiment of the present invention.
FIG. 15 is a bottom view showing a fourth example of a battery device according to an embodiment of the present invention.
FIG. 16 is an E-E cross-sectional view of FIG. 15 showing a fourth example of a battery device according to an embodiment of the present invention.
FIG. 17 is a view describing a state where a second battery device is being mounted on mounting portions.
FIG. 18 is a bottom view of a second battery device.

### DESCRIPTION OF PREFERRED EMBODIMENTS

A battery device, an electronic apparatus, and a battery unit combining the battery device with the electronic apparatus are realized based on a simple structure, where the battery device may be commonly used for multiple types of electronic apparatuses and thus effectively used, and no separate battery devices for different types of electronic apparatuses may be used. As a result, one battery device may be commonly used for the different types of the electronic apparatuses.

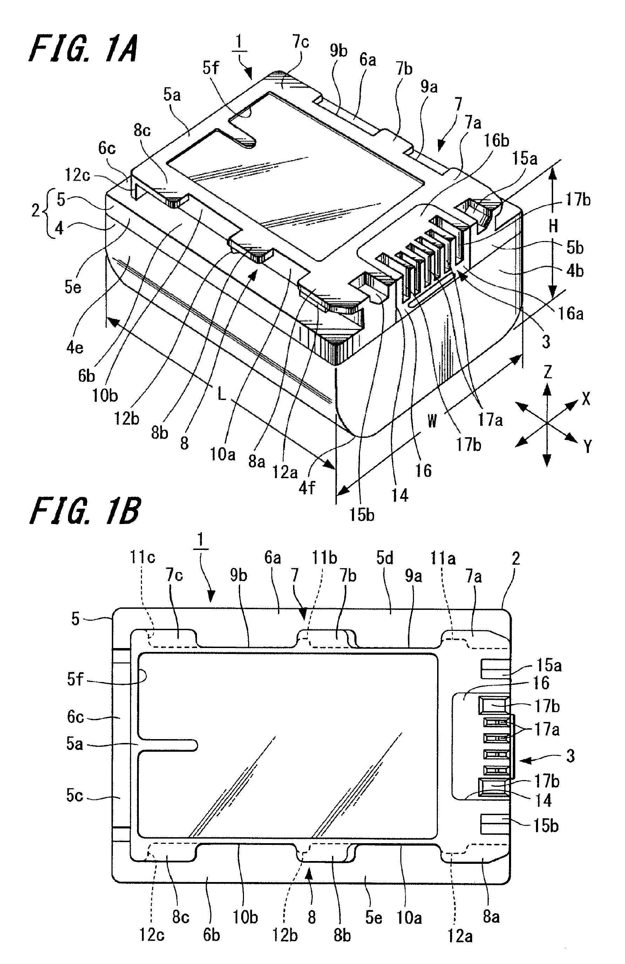

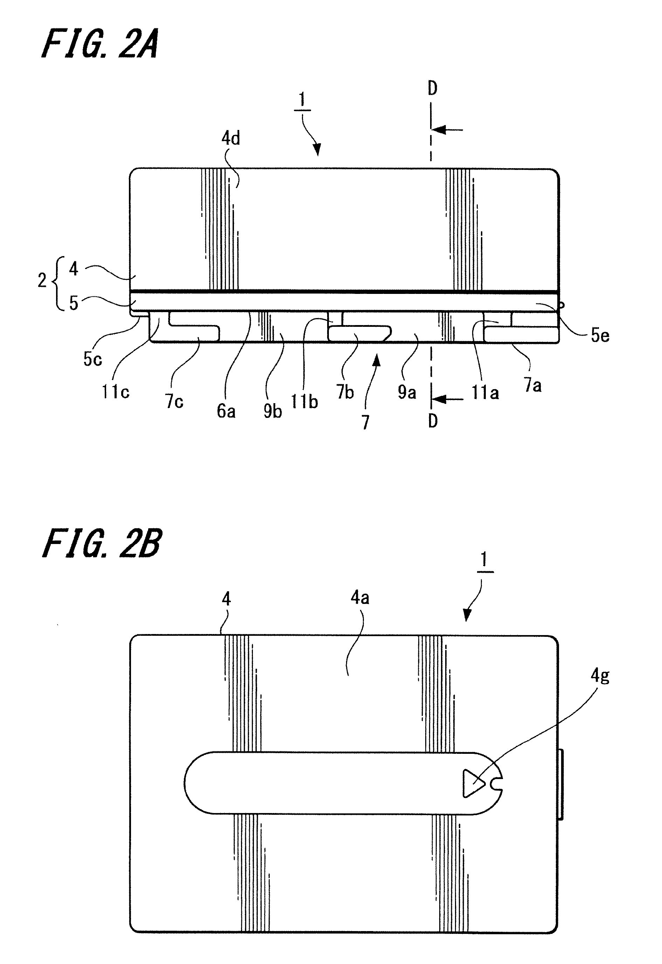

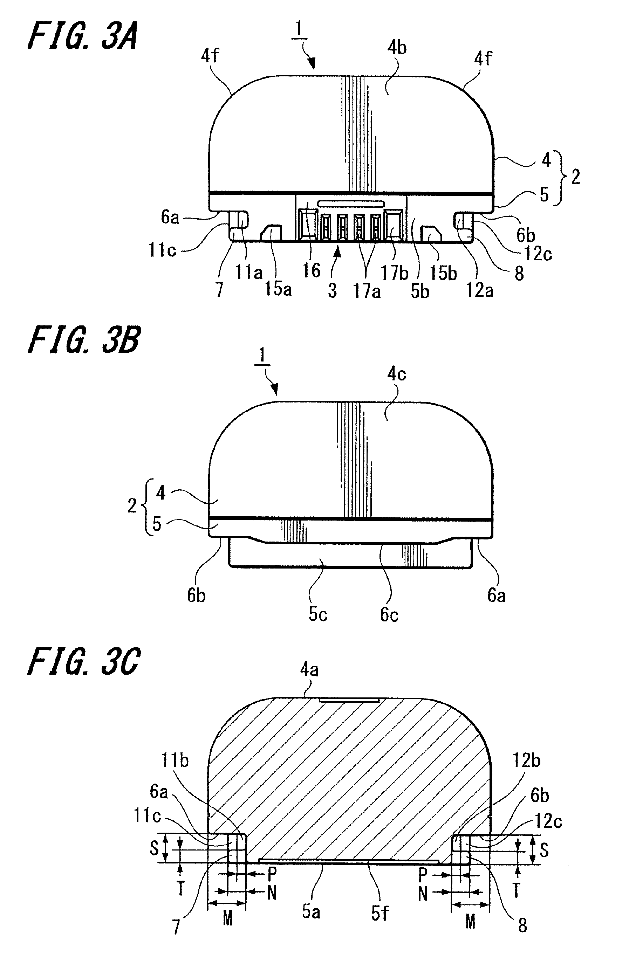

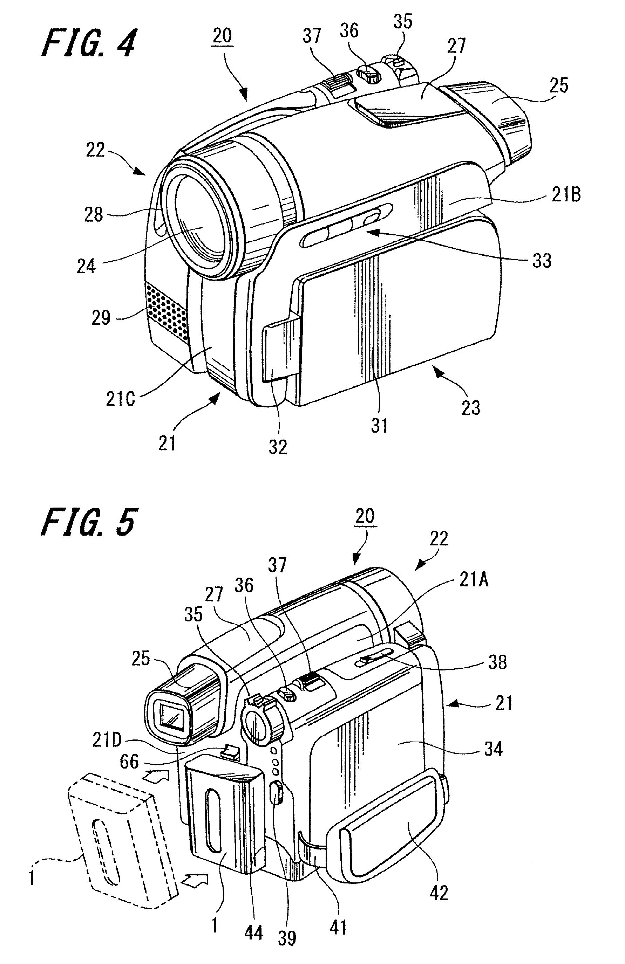

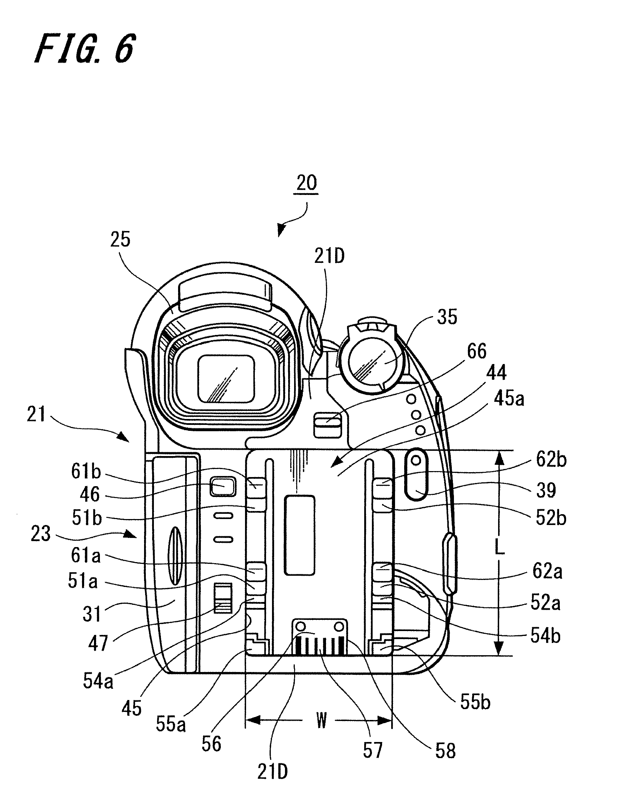

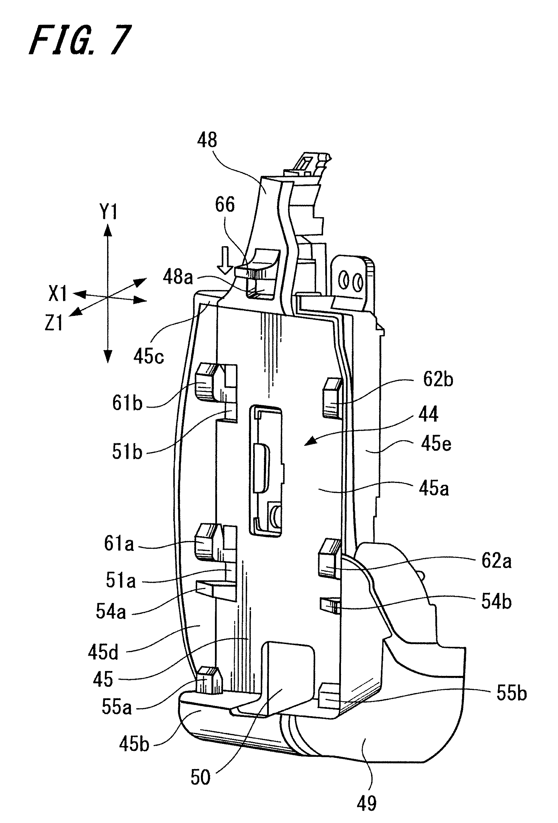

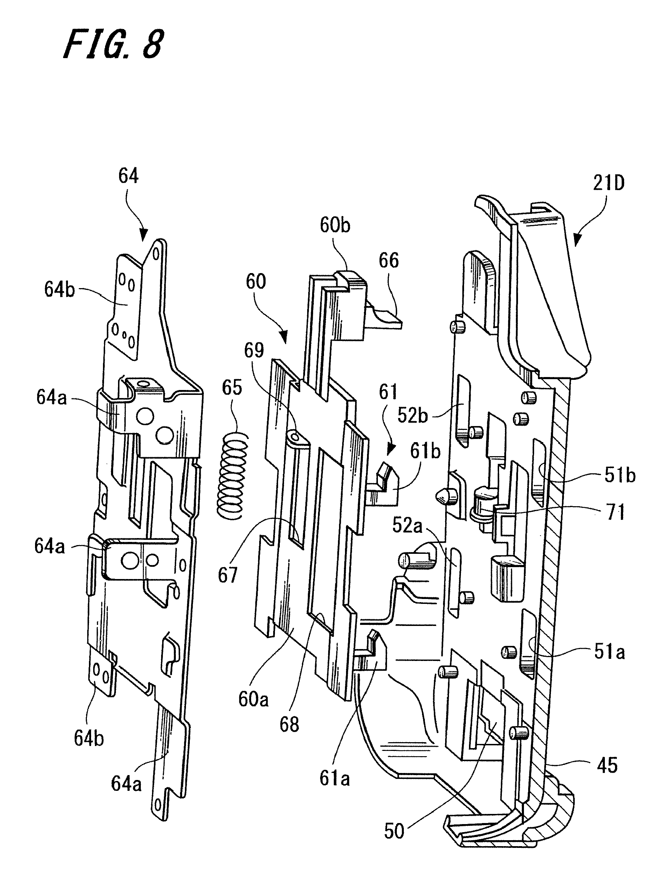

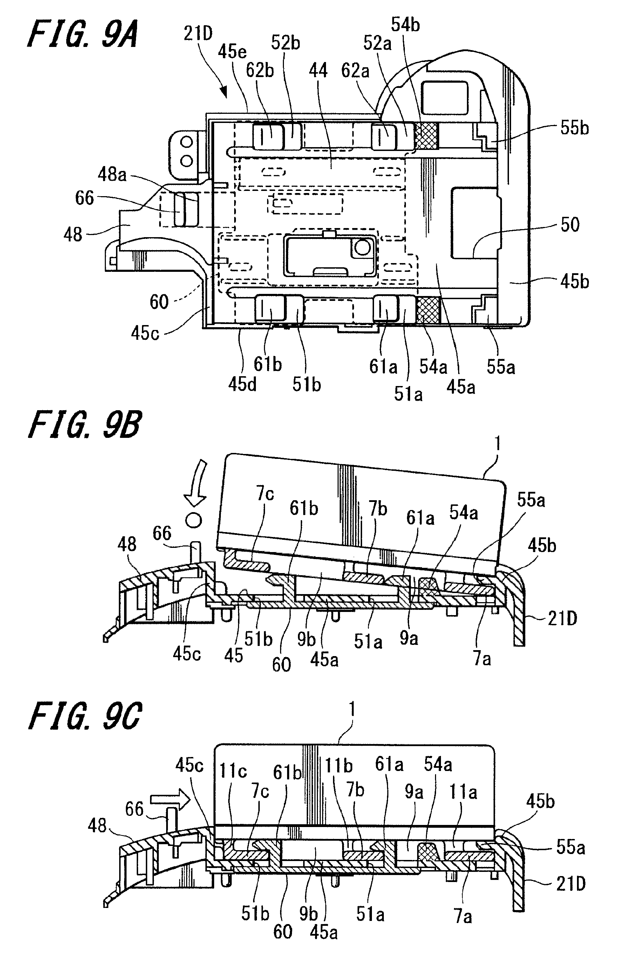

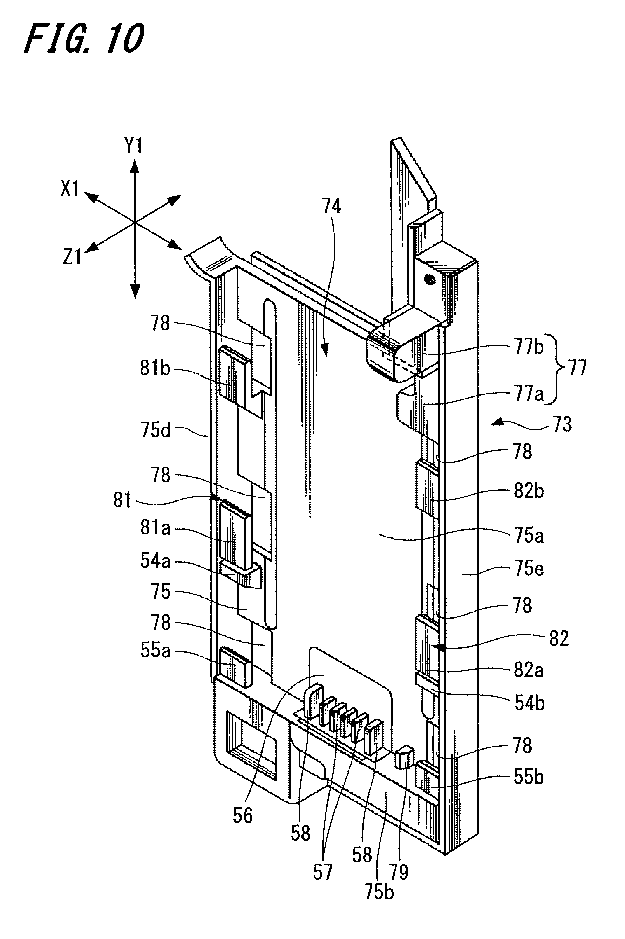

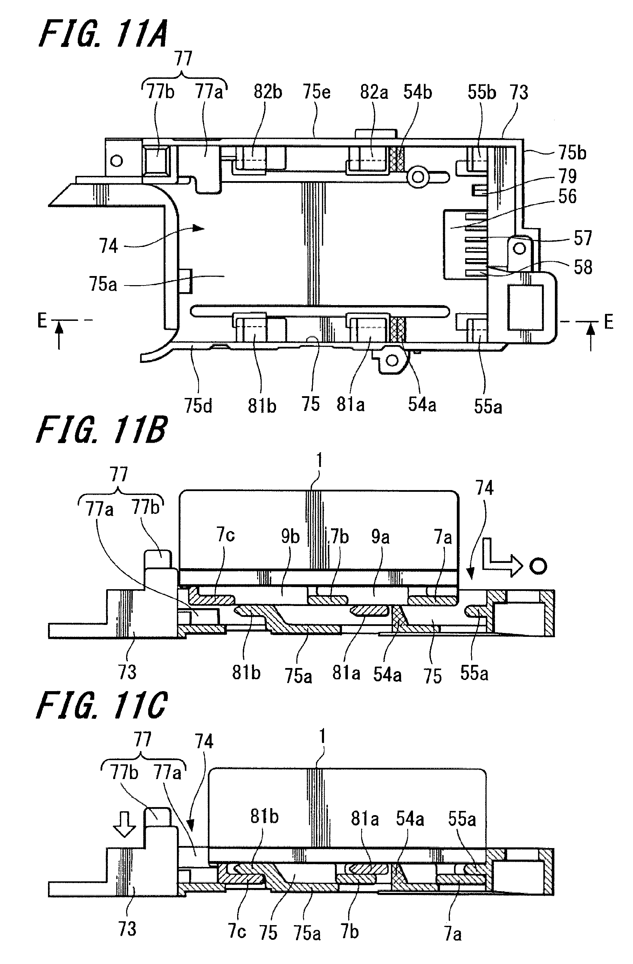

FIGS. 1 to 17 show examples of embodiments of the present invention. Specifically, FIGS. 1 to 3 show a first example of a battery device according to an embodiment of the present invention. In more detail, FIG. 1A is an oblique view, FIG. 1B is a bottom view, FIG. 2A is a left side view, FIG. 2B is a plan view, FIG. 3A is a front view, FIG. 3B is a rear view, and FIG. 3C is a D-D line cross-sectional view of FIG. 2A. FIGS. 4 to 7 show an imaging device as an example of electronic apparatus according to an embodiment of the present invention. Specifically, FIG. 4 is a front oblique view of the imaging device, FIG. 5 is a rear oblique view of the imaging device, FIG. 6 is a rear view of the imaging device, and FIG. 7 is an oblique view showing a first example of a rear panel of an exterior case. FIG. 8 is an exploded oblique view of a rear panel, a slide member, and a cover member, and FIGS. 9A to 9C describe a state of mounting a battery device in mounting portions of an imaging device. Specifically, FIG. 9A is a front view of the rear panel, FIG. 9B is a view describing an initial state during mounting the battery device, and FIG. 9C is a view describing a state after mounting the battery device. FIG. 10 is an oblique view showing a second example of a rear panel, and FIGS. 11A to 11C describe a state of mounting a battery device in mounting portions of an imaging device. Specifically, FIG. 11A is a front view of the rear panel, FIG. 11B is a view describing an initial state during mounting the battery device, and FIG. 11C is a view describing a state after mounting the battery device.

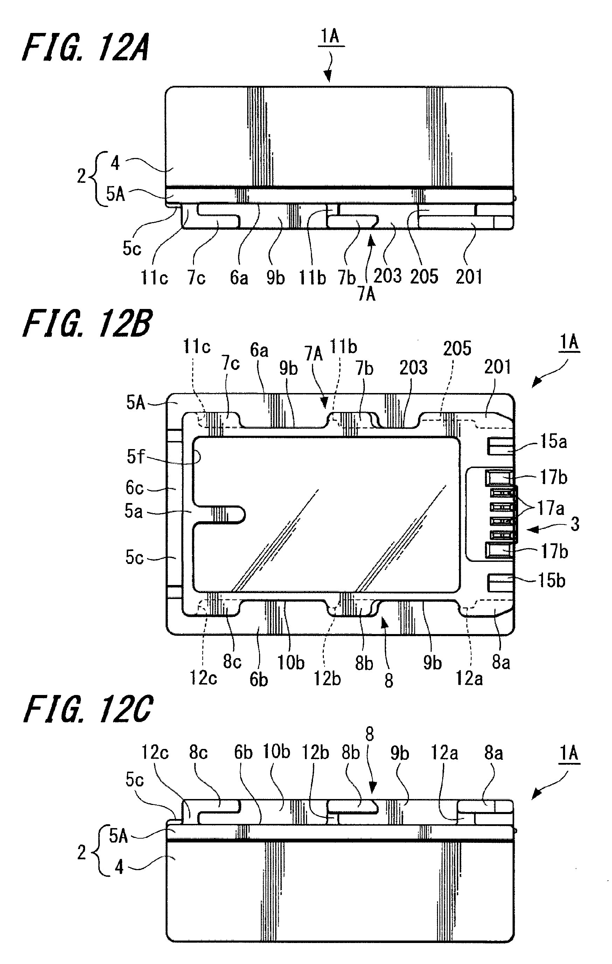

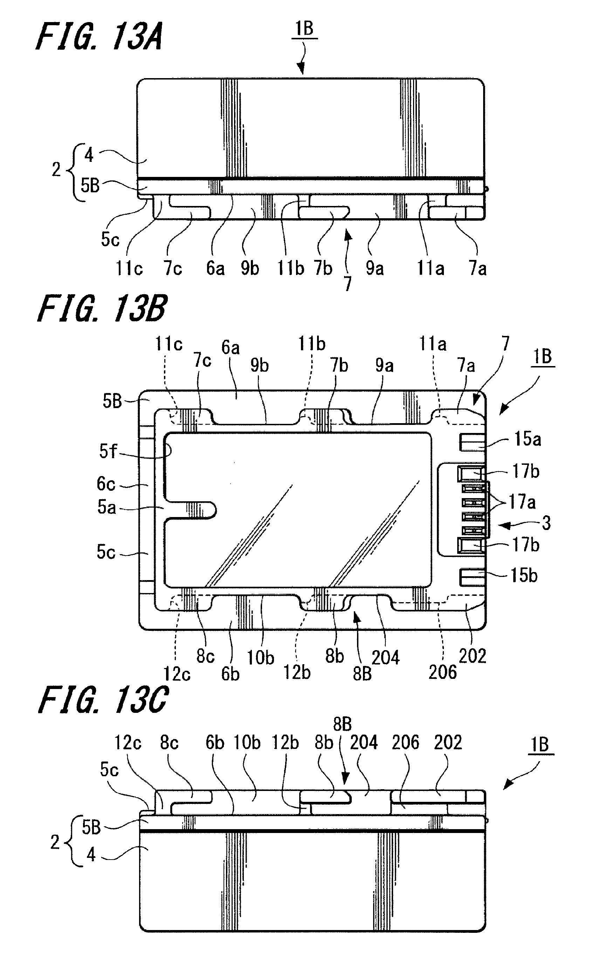

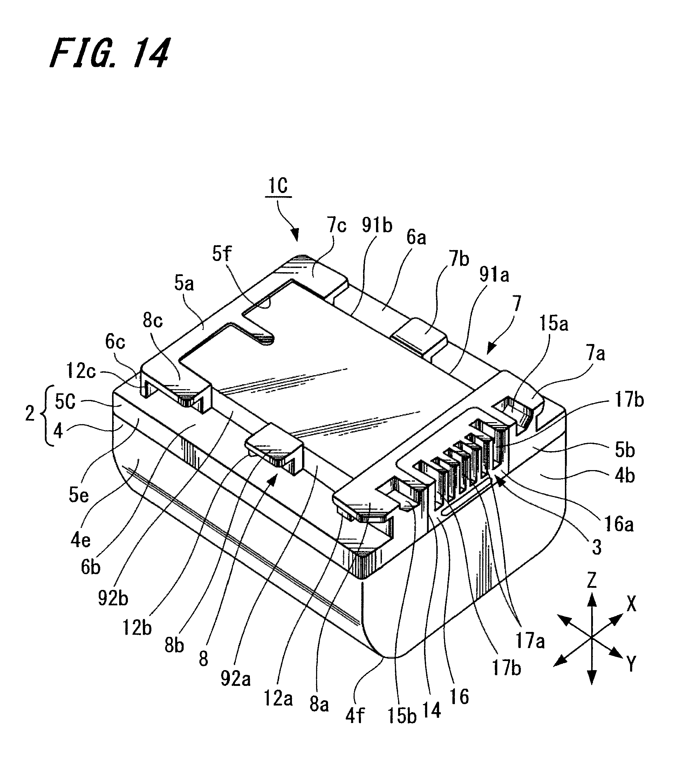

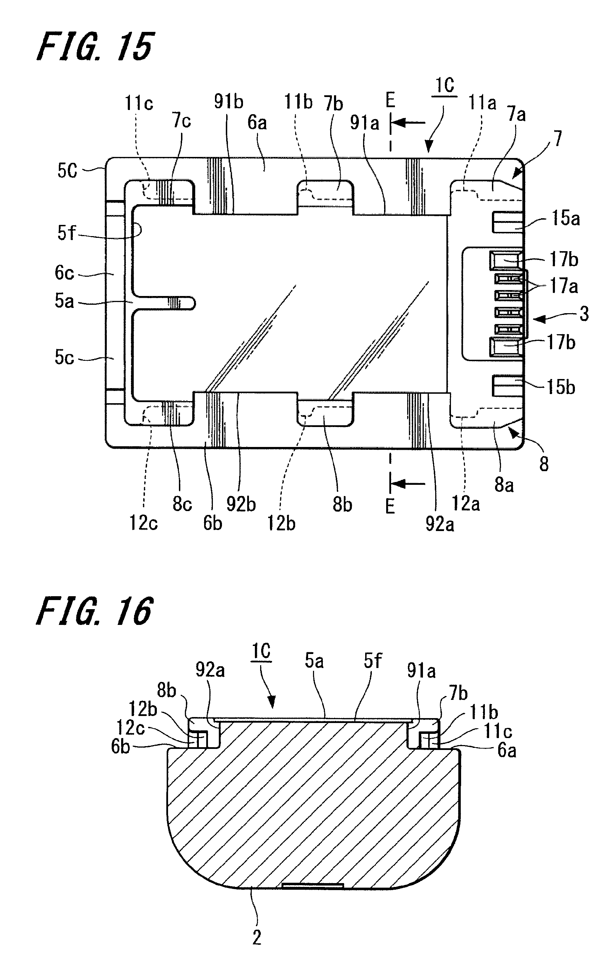

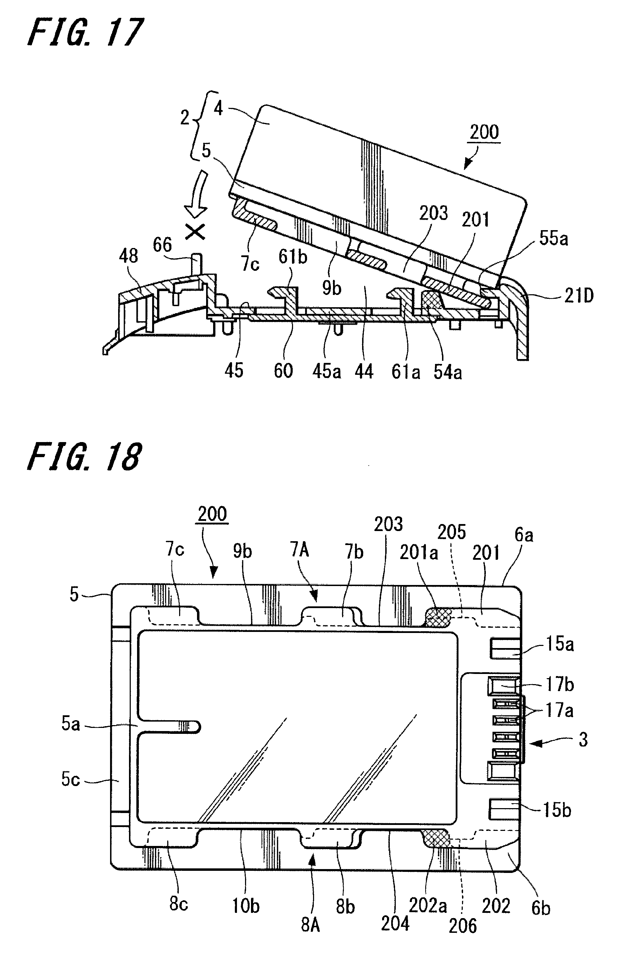

FIGS. 12A to 12C show a second example of a battery device according to an embodiment of the present invention. Specifically, FIG. 12A is a left side view, FIG. 12B is a bottom view, and FIG. 12C is a right side view. FIGS. 13A to 13C show a third example of a battery device according to an embodiment of the present invention. Specifically, FIG. 13A is a left side view, FIG. 13B is a bottom view, and FIG. 13C is a right side view. FIGS. 14 to 16 show a fourth example of a battery device according to an embodiment of the present invention. Specifically, FIG. 14 is an oblique view, FIG. 15 is a bottom view, and FIG. 16 is an E-E line cross-sectional view of FIG. 15. FIG. 17 is an oblique view of a third example of a rear panel.

### [Example 1]

First, a first example of a battery device suitable for use in an imaging device included in an electronic apparatus according to an embodiment of the present invention is described with reference to FIGS. 1 to 3. The battery device 1 includes a battery enclosure 2 formed of a hollow container, a battery cell and a control circuit (not shown) provided in the battery enclosure 1, and an output terminal 3 located such that part of the output terminal 3 is exposed in a surface of the battery enclosure 2.

As shown in FIG. 1A, the battery enclosure 2 shown in this example is formed as an approximately rectangular parallelepiped block-shaped container having a dimension L for a longitudinal direction Y, a dimension W for a crosswise direction X at right angles to the longitudinal direction Y, and a dimension H for a height direction Z at right angles to the longitudinal direction Y and the crosswise direction X. In this example, the dimensions of the battery enclosure 2 (length L, width W, and height H) are set to have a relation represented by length L > width W > height H. However, a shape of a battery device according to an embodiment of the present invention is not limited to a shape of the battery device of this example. It is possible to sufficiently increase the height H (for example, width W < height H), to include a longer width W than the length L (length L < width W), and to use other variations in the dimensions, for example. The battery enclosure 2 includes a container-shaped upper case 4 with one surface open and a cover-shaped lower case 5 mounted to close the opening of the upper case 4.

The upper case 4 has a rectangular upper surface 4a, a front surface 4b, a rear surface 4c, a left side surface 4d, and a right side surface 4e. The front surface 4b is continuous with the upper surface 4a to be approximately perpendicular to one side of the upper surface 4a in the longitudinal direction Y. The rear surface 4c is continuous with the upper surface 4a to be approximately perpendicular to the other side of the upper surface 4a in the longitudinal direction Y. The left side surface 4d is continuous with the upper surface 4a to be approximately perpendicular to one side of the upper surface 4a in the crosswise direction X. The right side surface 4e is continuous with the upper surface 4a to be approximately perpendicular to the other side of the upper surface 4a in the crosswise direction X. Circular chamfers 4f, 4f each having a large radius of curvature are provided in a corner at which the upper surface 4a intersects with the left side surface 4d and a corner at which the upper surface 4a intersects with the right side surface 4e, respectively. Further, as shown in FIG. 2B, a triangular mark 4g to indicate a surface where the output terminal 3 of the battery device 1 is present is provided in an approximate center of the upper surface 4a.

The lower case 5 has a lower surface 5a, a front surface 5b, a rear surface 5c, a left step portion 5d, and a right step portion 5e. The lower surface 5a is approximately rectangular and shows a specific example of a second surface of the battery enclosure 2. The front surface 5b forms part of a first surface continuous with the lower surface 5a to be approximately perpendicular to one side of the lower surface 5a in the longitudinal direction Y. The rear surface 5c has a third step surface 6c continuous with the lower surface 5a with a predetermined step from the other side of the lower surface 5a in the longitudinal direction Y. The left step portion 5d has a first step surface 6a continuous with the lower surface 5a with a predetermined step from one side of the lower surface 5a in the crosswise direction X. The right step portion 5e has a second step surface 6b continuous with the lower surface 5a with a predetermined step from the other side of the lower surface 5a in the crosswise direction X. As shown in FIG. 3B, the third stepped 6c is formed with a trapezoid projection of which center is higher. The front surface 5b of the lower case 5 and the front surface 4b of the upper case 4 form a front surface that is the first surface of the battery enclosure 2.

A recess 5f for application of a label is formed to have an appropriate depth on the lower surface 5a of the lower case 5. As shown in FIG. 3C, the first step surface 6a and the second step surface 6b are set to have an approximately equal height S (length in the height direction Z) from the lower surface 5a. Further, the first step surface 6a and the second step surface 6b are also set to have an approximately equal width M (length in the crosswise direction X). The first step surface 6a and the second step surface 6b are formed to be approximately parallel to the lower surface 5a, respectively.

Further, as shown in FIGS. 1A and 1B, a first engaging portion 7 and a second engaging portion 8 are provided in the lower case 5, where the first engaging portion 7 is formed protruding from one side of the lower surface 5a with predetermined width N and thickness T in the crosswise direction W that is the second surface, and the second engaging portion 8 is formed protruding from the other side of the lower surface 5a with predetermined width N and thickness T in the crosswise direction. The first engaging portion 7 and the second engaging portion 8 are symmetrical with each other, and the width (protrusion length) N of each of the engaging portions 7 and 8 is set to be about 1/2 the width M of each of the first step surface 6a and the second step surface 6b. The thickness T of each of the first engaging portion 7 and the second engaging portion 8 is set to be 1/2 or less the height S of each of the first step surface 6a and the second step surface 6b.

The first engaging portion 7 has an engaging piece 7a, an engaging piece 7b, and an engaging piece 7c provided at appropriate intervals in the longitudinal direction Y. The first engaging portion 7a is placed on a front surface 5b side, the third engaging portion 7c is placed on a rear surface 5c side, and the second engaging portion 7b is placed in a middle between the first engaging portion 7a and the third engaging portion 7c. A first opening 9a is provided between the first engaging piece 7a and the second engaging piece 7b, and a second opening 9b is provided between the second engaging piece 7b and the third engaging piece 7c. Similarly, the second engaging portion 8 has an engaging piece 8a, an engaging piece 8b, and an engaging piece 8c provided at appropriate intervals in the longitudinal direction Y. The first engaging portion 8a is placed on a front surface 5b side, the third engaging portion 8c is placed on a rear surface 5c side, and the second engaging portion 8b is placed in a middle between the first engaging portion 8a and the third engaging portion 8c. A first opening 10a is provided between the first engaging piece 8a and the second engaging piece 8b, and a second opening 10b is provided between the second engaging piece 8b and the third engaging piece 8c.

Further, as shown in FIGS. 1B and 2A, a first rib 11a is provided on a rear surface 5c side of the first engaging piece 7a of the first engaging portion 7; a second rib 11b is provided on a rear surface 5c side of the second engaging piece 7b; and a third rib 11c is provided on a rear surface 5c side of the third engaging piece 7c. Similarly, a first rib 12a is provided on a rear surface 5c side of the first engaging piece 8a of the second engaging portion 8; a second rib 12b is provided on a rear surface 5c side of the second engaging piece 8b; and a third rib 12c is provided on a rear surface 5c side of the third engaging piece 8c. A protrusion length (width) P of each of the first ribs 11a, 12a and the second ribs 11b, 12b is set to be about 1/2 a protrusion length (width) N of each of the first engaging pieces 7a, 8a and the second engaging pieces 7b, 8b. On the other hand, a protrusion length (width) of each of the third ribs 11c, 12c is set to be approximately equal to a protrusion length (width) N of the third engaging piece 8c.

An opening 14 to expose part of the output terminal 3 is provided on a front surface 5b side of the lower case 5. The opening 14 is formed as a continuous notch from the front surface 5b to the lower surface 5a and is provided to notch a whole center of the front surface 5b in the crosswise direction X. Further, two discrimination recesses 15a, 15b to discriminate a type of the battery device 1 are provided on both sides of the opening 14 of the lower case 5 in the crosswise direction X. The two discrimination recesses 15a, 15b are each formed to have a specific shape according to a shape, a power capacity, or the like of the battery device 1. Type discrimination projections provided in mounting portions of an electronic apparatus described later are each detachably engaged with the discrimination recesses 15a, 15b.

As shown in FIGS. 1A, 1B, and 3A, the output terminal 3 mounted on the opening 14 of the lower case 5 has a block-shaped terminal holder 16 having at least: a front surface 16 coplanar with the front surface 5b of the lower case 5; and a lower surface 16b approximately perpendicular to the front surface 16a and coplanar with the lower surface 5a of the lower case 5. The terminal holder 16 has: multiple (four in this example) electrode slits 17a, 17a in which electrodes are placed; and two positioning slits 17b, 17b placed on both sides of the multiple electrode slits 17a. The electrode slits 17a and the positioning slits 17b are formed in a corner of the terminal holder 16 as groove-shaped notches continuous from the front surface to the bottom surface.

Positioning protrusions of a connection terminal provided in mounting portions of an electronic apparatus described later are each engaged with the two positioning slits 17b of the terminal holder 16. Similarly, electrodes of the connection terminal are each engaged with the four electrode slits 17a. Electrodes of the output terminal 3 (not shown) are each placed in the four electrode slits 17a. The battery cell incorporated in the battery enclosure 2 is electrically connected to each of the electrodes of the output terminal 3.

The lower case 5 having such a configuration is overlapped with the upper case 4 to close an opening of the upper case 5 and portions overlapped in this manner are joined together. Obviously, the portions may be joined together by use of an adhesive, by thermally welding, or by another joining method, for example. Accordingly, the battery enclosure 2 is formed having the upper case 4 and the lower case 5 integrated. One or more battery cells and a control circuit having a microcomputer including a CPU, a RAM and ROM, and an interface are stored in the battery enclosure 2. The battery cell(s) and the control circuit are electrically connected to each other and also electrically connected to the output terminal 3, and are formed so that data of information on a battery capacity, a property, and others may be communicated between the battery cell(s) and the control circuit and external electronic apparatus through the output terminal 3. The battery device 1 is formed in this manner.

Next, a first example of an imaging device included in a suitable electronic apparatus using the battery device 1 as a portable power source will be described with reference to FIGS. 4 to 6. The device shown in FIGS. 4 to 6 is a digital video camera 20 used as a first example of an imaging device. The digital video camera 20 includes a tape cassette having a magnetic tape as an information storage medium and converts an optical image into electric signals using an imaging element (such as a CCD (charge coupled device) or a CMOS image sensor) showing a specific example of an imaging mechanism, so that the image information may be recorded in the magnetic tape and displayed in a display device formed with a flat panel such as a liquid crystal display.

However, an information storage medium used in an imaging device showing a specific example of an electronic apparatus according to an embodiment of the present invention is not limited to the magnetic tape shown in this example, and it is possible to use disc-shaped recording media such as recordable optical discs, magneto-optical discs, and magnetic discs including DVD-Rs, DVD-RWs, DVD-RAMs, MOs, and FDs. An electronic apparatus using such a disc-shaped recording medium may be realized as an optical disc video camera when using an optical disc; a magneto-optical disc still camera when using a magneto-optical disc; or a magnetic disc electronic organizer when using a magnetic disc, for example.

The digital video camera 20 has: an exterior case 21 showing a specific example of a case main body formed with an enclosure forming an appearance; a tape drive device that is stored in the exterior case 21 and drives a magnetic tape of a tape cassette detachably mounted on the tape drive device to record (write) and reproduce (read) information signals; a control circuit to control driving of the tape drive device; a lens device 22 to incorporate a subject image as light to guide the image to the imaging device; and a display device rotatably attached to the exterior case 21.

As shown in FIGS. 4 to 6, the exterior case 21 is formed with an approximately rectangular parallelepiped hollow enclosure and has: a driving device side panel 21A and a display device side panel 21B placed opposite to each other in a transverse direction; a front panel 21C to close a front opening of a cylinder formed with combining both panels; and a rear panel 21D to close a rear opening of the cylinder. The exterior case 21 has a longitudinal direction set to be a back-and-forth direction and is used as raised in a crosswise direction. A lens device 22 is provided in an upper portion of the exterior case 21 in a state where a subjective lens 24 as an imaging lens of a lens system is exposed on a front surface.

The lens device 22 is attached to the exterior case 21 in a state where an optical axis of the lens system is in a horizontal direction. An imaging element (not shown) is attached to a rear portion of the lens device 22 in the exterior case 21. A view finder device 25 is placed behind the lens device 22 to reflect a subject image input from the lens device 22. An opening is provided in the upper portion of the external case 21 to expose an accessory shoe in which accessories such as a video light and an external microphone are detachably mounted. The accessory shoe is placed immediately in front of the view finder device 25 and usually detachably covered with a shoe cap 27 to open and close the opening. Further, a light emitting portion 28 of a flash device and an incorporated stereo-type microphone 29 are placed on a front surface of the exterior case 21.

As shown in FIG. 4, a display device 23 is attached to one side surface of the exterior case 21 so that an attitude of the display device may be modified. The display device 23 has: a flat panel (not shown) formed with a flat liquid crystal display or the like; a panel case 31 in which the flat panel is stored; and a panel support 32 to support the panel case 31 so that an attitude of the panel case may be modified with respect to the exterior case 21. The panel support 32 has: a horizontal rotation portion to make the panel case 31 rotatable at about 90° in a horizontal direction with a vertical axis as a rotation center; and a back-and-forth rotation portion to make the panel case 31 rotatable at about 180° in a back-and-forth direction with a horizontal axis as a rotation center.

Accordingly, the display device 23 may be freely in a state where the flat panel is stored in a side surface of the exterior case 21 as shown in FIG. 4; in a state where the flat panel faces backward by rotating the panel case 31 at 90° from that state; in a state where the flat panel faces forward by rotating the panel case 31 at 180° from the backward facing state; or in a state where the flat panel is in an intermediate position among these positions. An operation portion 33 formed with a plurality of operation buttons is provided on a side surface of the exterior case 21 above the display device 23.

As shown in FIG. 5, a deck cover 34 to closably cover a tape deck in which the tape cassette is detachably mounted is closably provided on a side surface of the exterior case 21 opposite to the display device 23. The tape deck is a device to transport the mounted tape cassette to a predetermined position and to draw the magnetic tape from the cassette and load the tape on a rotation drum or the like of the tape drive device, and then allow the magnetic tape to run at a predetermined speed to record (write) and/or reproduce (read) information signals. The deck cover 34 to cover the tape deck has a power source switch 35 also used as a mode selector switch, a shutter button 36 to photograph a static image; a zoom button 37 to continuously enlarge (tele) or reduce (wide) an image within a predetermined range, an opening/closing switch 38 to lock and unlock the deck cover 34, and a video recording button 39 to photograph a moving image.

The power source switch 35 has functions to switch the power source on and off by a rotation operation and to switch a plurality of function modes to each other to repeat them by performing a rotation operation with the power source switched on. Further, a hand belt 41 is attached to the deck cover 34 and a hand pad 42 is mounted on the hand belt 41. The hand belt 41 and the hand pat 42 support a hand of a user holding the exterior case 21 to prevent dropping of the digital video camera 20, for example.

As shown in FIGS. 5 and 6, mounting portions 44 is provided on a rear surface of the exterior case 21 as a battery housing portion in which the battery device 1 as a portable power source is detachably mounted. The mounting portions 44 is provided slightly lower than an approximate center of the rear surface of the exterior case 21, and is provided to open backward in the rear panel 21D forming the rear surface of the exterior case 21. The video recording button 39 is placed to the right of the mounting portions 44 on the rear surface of the exterior case 21, and a light emitting button 46 of the flash device and a night shot selector switch 47 are placed to the left of the mounting portions 44.

As shown in FIG. 7, the rear panel 21D is formed with a panel member formed longer in a vertical direction, and the mounting portions 44 formed with a recess is formed in one surface of the rear panel D. The mounting portions 44 has a rectangular recess 45 approximately as large as the battery device 1 (precisely, the mounting portions 44 has a length in a crosswise direction X1 approximately identical to that of the recess 45, but has a length in a longitudinal direction Y1 indicating a length of the battery device 1 plus a length of a clearance to allow the battery device 1 to be stored in the recess 45 by rotating the battery device 1 with one edge of the battery device in the longitudinal direction as a rotation center).

The recess 45 has a bottom surface 45a, a lower surface 45b, an upper surface 45c, a left side surface 45d, and a right side surface 45e. The bottom surface 45a is rectangular and shows a specific example of an electronic apparatus side second surface. The lower surface 45b is continuous with one side of the bottom surface 45a in the longitudinal direction Y1 and approximately perpendicular to the bottom surface 45a and shows a specific example of an electronic apparatus side first surface. The upper surface 45c is continuous with the other side of the bottom surface 45a in the longitudinal direction Y1 and approximately perpendicular to the bottom surface 45a. The left side surface 45d is continuous with one side of the bottom surface 45a in the crosswise direction X1 at right angles with the longitudinal direction Y1 and approximately perpendicular to the bottom surface 45a. The right side surface 45d is continuous with the other side of the bottom surface 45a in the crosswise direction X1 and approximately perpendicular to the bottom surface 45a. The recess 45 is provided with the longitudinal direction Y1 set to be a vertical direction.

Further, an upper facing 48 protruding upward is provided on the upper surface 45c, and an insertion hole 48a into which an operation projection is inserted is provided on the upper facing 48. A lower facing 49 is provided to be continuously projected laterally and downward in a portion ranging from a lower portion of the right side surface 45e to the lower surface 45b. An opening 50 to which a connection terminal described later is fitted is provided in an approximate center of the lower surface 45b. The opening 50 is formed as a notch continuously extending from the lower surface 45b to a middle of the bottom surface 45a.

There are provided, on the lower surface 45b of the recess 45, two first penetration holes 51a, 51b into which a first hook 61 described later may penetrate and two second penetration holes 52a, 52b into which a second hook 62 may penetrate. The two first penetration holes 51a, 51b are provided along the left side surface 45d of the recess 45, where the lower penetration hole 51a is placed at a predetermined interval from the lower surface 45b and the upper penetration hole 51b is placed at a predetermined interval from the lower penetration hole 51a. The two second penetration holes 52a, 52b are provided along the right side surface 45e of the recess 45, where the lower penetration hole 52a is placed at a predetermined interval from the lower surface 45b and the upper penetration hole 52b is placed at a predetermined interval from the lower penetration hole 52a.

The first penetration holes 51a, 51b and the second penetration holes 52a, 52b are provided symmetrically with each other. Discrimination projections 54a, 54b to allow mounting of the first battery device 1 but reject mounting of a second battery device having a structure slightly different from that of the first battery device 1 are provided on lower surface 45b sides of the two lower penetration holes 51a, 52a, respectively. Each of the discrimination projections 54 is formed as a semi-trapezoid projection having an inclined plane on a lower surface 45b side and an approximately vertical plane on a side opposite to that side. Specifically, the two discrimination projections 54a, 54b have a function to discriminate the battery device 1 that may be mounted on the mounting portions 44 and a battery device that may not be mounted on the mounting portions 44. The first battery device 1 may be mounted, but a second battery device as a common battery device may not be mounted having an external shape approximately identical to that of the first battery device 1 and having first engaging pieces 7a, 8a formed slightly larger than those of the first battery device 1 (in other words, having first openings 9a, 10a formed slightly smaller than those of the first battery device 1).

In order to ensure such a function, as shown in FIGS. 9A to 9C, the first lower penetration hole 51a and the first discrimination projection 54a are provided opposite to the first opening 9a placed between the first engaging piece 7a and the second engaging piece 7b of the first engaging portion 7 of the battery device 1 mounted on the mounting portions 44. Similarly, the second lower penetration hole 52a and the second discrimination projection 54b are provided opposite to the first opening 10a placed between the first engaging piece 8a and the second engaging piece 8b of the second engaging portion 8 of the battery device 1. The first upper penetration hole 51b is provided opposite to the second opening 9b placed between the second engaging piece 7b and the third engaging piece 7c of the first engaging portion 7 of the battery device 1. Similarly, the second upper penetration hole 52b is provided opposite to the second opening 10b placed between the second engaging piece 8b and the third engaging piece 8c of the second engaging portion 8 of the battery device 1.

Two protrusions 55a, 55b to position and support engagement of the battery device 1 are provided on both corners on a lower edge of the recess 45. The two protrusions 55a, 55b are formed with a predetermined clearance from the lower surface 45a to protrude upward from the lower surface 45b. When the battery device 1 is mounted, the first protrusion 55a is engaged with the first engaging piece 7a of the first engaging portion 7 of the battery device 1, and the second protrusion 55b is engaged with the first engaging piece 8a of the second engaging portion 8 of the battery device 1. A connection terminal 57 is placed in an approximate center between the first protrusion 55a and the second protrusion 55b, where the connection terminal is detachably connected to the output terminal 3 of the battery device 1 when the battery device 1 is mounted.

The connection terminal 57 has a connection portion having a shape and a structure corresponding to those of an output portion of the output terminal 3 of the battery device 1. Specifically, the connection terminal 57 has: four electrodes 57 that are provided corresponding to the number of electrodes of the output terminal 3 and may be inserted into the four electrode slits 17a, respectively; and two guide pieces 58 that may be inserted into the two positioning slits 17b, 17b, respectively. The four electrodes 57 are placed at equal predetermined intervals in the crosswise direction X1 of the mounting portions 44, and the two guide pieces 58 are provided outside the electrodes 57 at a predetermined interval.

As shown in FIG. 8, a slide member 60 is placed on a rear surface of the rear panel 21D having the mounting portions 44, and a cover member 64 is placed on a rear surface of the slide member 60. The slide member 60 is supported with respect to the rear panel 21D slidably in a vertical direction that is the longitudinal direction Y1 of the mounting portions 44. The cover member 64 is fixed to the rear panel 21D to prevent dropping of the slide member 60. A coil spring 65 showing a specific example of an energizing member to energize the slide member 60 away from the connection terminal 56 is present between the slide member 60 and the rear panel 21D.

The slide member 60 has: a base 60a formed with an approximately rectangular plate smaller than the bottom surface 45a of the recess 45; and an operation portion 60b provided protruding upward and continuously with an upper edge of the base 60a. The first hook 61 and the second hook 62 are provided at a predetermined interval between them on one surface of the base 60a. The first hook 61 is placed on one side of the base 60a in a crosswise direction, and the second hook 62 is placed on the other side of the base 60a in the crosswise direction. The first hook 61 is formed with a first hook piece 61a on a side remote from the operation portion 60b and a second hook piece 61b on a side close to the operation portion 60b. Similarly, the second hook 62 is formed with a first hook piece 62a on a side remote from the operation portion 60b and a second hook piece 62b on a side close to the operation portion 60b.

The two hook pieces 61a, 61b of the first hook 61 are placed in series in a longitudinal direction of the base 60a; similarly, the two hook pieces 62a, 62b of the second hook 62 are placed in series in the longitudinal direction of the base 60a. The four hook pieces 61a, 61b, 62a, 62b are symmetrically placed with respect to the longitudinal direction of the base 60a. Further, nails protruding toward the operation portion 60b are provided on tops of the four hook pieces 61a to 62b, respectively. Each nail having an appropriate length extends approximately parallel to the base 60a. The four hook pieces 61a to 62b are slidably inserted from a rear surface side into the four penetration holes 51a, 51b, 52a, 52a of the rear panel 21D, respectively. Internal and external surfaces of a top of each nail of the four hook pieces 61a to 62b each preferably have an inclined plane having an appropriate size in order to facilitate engagement with and detachment from the engaging portions 7, 8 of the battery device 1.

FIG. 7 shows a state where the four hook pieces 61a to 62b are inserted into the four penetration holes 51a, 51b, 52a, 52b. In this insertion state, an operation projection 66 provided in the operation portion 60b of the slide member 60 is slidably inserted into the insertion hole 48a provided on the upper facing 48 of the rear panel 21D, and accordingly a top of the operation projection 66 protrudes toward a rear surface side. The operation projection 66 protrudes in a direction identical to those of the four hook pieces 61a to 62b with a height equal to those of the four hook pieces 61a to 62b. A long hole 67 to store the coil spring 65 and an opening window 68 to avoid interference with other components are also provided in the base 60a of the slide member 60.

A slide side spring bearing piece 69 in which one edge of the coil string 65 sits is provided on one side of the long hole 67 in a longitudinal direction in the base 60a. A rear panel side spring bearing portion 71 provided opposite to the spring bearing piece 69 is inserted into the other side of the long hole 67 in the longitudinal direction. The spring bearing portion 71 is provided on a rear surface of the rear panel 21D, and the coil string 65 in a compressed state is present between the spring bearing portion 71 and the spring bearing piece 69. The slide member 60 is always energized away from the connection terminal 56 by a spring force of the coil spring 65.

A support plate 64 slidably supports the slide member 60 between the support plate 64 and the rear panel 21D and functions to prevent dropping of the coil spring 65. The support plate 64 is formed smaller than the rear panel 21D but larger than the slide member 60 and is clamped and fixed to the rear panel 21D by a fixing screw. Multiple attachment brackets 64a and fixing portions 64b are provided in the support plate 64.

The mounting portions 44 having such a configuration for the battery device may be assembled as follows, for example. First, as shown in FIG. 8, the slide member 60 is allowed to face a rear surface of the rear panel 21D, and the support plate 64 is placed on the rear surface of the slide member 60 to hold the slide member 60 between the rear panel 21D and the support plate 64. Then, the four hook pieces 61a, 61b, 62a, 62b protruding from one surface of the base 60a of the slide member 60 are inserted and allowed to penetrate into the four penetration holes 51a, 51b, 52a, 52b provided in the recess 45 of the rear panel 21D, respectively, from the rear surface of the rear panel 21D. Accordingly, tops of the four hook pieces 61a to 62b are each allowed to protrude into the recess 45, and a predetermined clearance is formed between an internal surface of each nail and the bottom surface 45a of the recess 45.

At the same time, the operation projection 66 provided on a top of the operation portion 60b of the slide member 60 is inserted and allowed to penetrate into the insertion hole 48a provided in the upper facing 48 protruding from an upper side of the recess 45 of the rear panel 21D. Next, the coil spring 65 is allowed to be present between the spring bearing portion 71 of the rear panel 21D and the spring bearing piece 69 of the slide member 60. Thereafter, the support plate 64 is overlapped with the slide member 60, and the support plate 64 is clamped and fixed to the rear panel 21D by a fixing screw. Accordingly, the slide member 60 is slidably supported between the support plate 64 and the rear panel 21D. The slide member 60 is always energized away from the connection terminal 56 by a spring force of the coil spring 65. An assembly process of the mounting portions 44 is completed in this manner, and the rear panel 21D may be assembled.

The battery device 1 may be mounted on and detached from the mounting portions 44 formed as described above in the following manner, for example. FIG. 9A is a view describing the rear panel 21D with a front view of the mounting portions 44, FIG. 9B is a view describing a state when insertion of the battery device 1 starts, and FIG. 9C is a view describing a state when insertion of the battery device 1 is completed. In FIGS. 9B and 9C, the three engaging pieces 8a, 8b, 8c of the second engaging portion 8 are engaged with the two hook pieces 62a, 62b of the second hook 62 and the second protrusion 55b in the same manner in which the three engaging pieces 7a, 7b, 7c of the first engaging portion 7 formed symmetrically with the engaging pieces 8a, 8b, 8c are engaged with the two hook pieces 61a, 61b of the first hook 61 and the first protrusion 55a. Therefore, an operation of one set formed with the first engaging portion 7 and others is described here, and description of an operation of the other set formed with the second engaging portion 8 and others is omitted.

First, a case of mounting the battery device 1 in the mounting portions 44 will be described. In this case, as shown in FIG. 9B, a front surface on a output terminal 3 side of the battery device 1 is allowed to face a lower edge of the recess 45 of the mounting portions 44. The first engaging piece 7a of the first engaging portion 7 and the first engaging piece 8a of the second engaging portion 8 provided on both sides in the crosswise direction X of a first surface of the battery device 1 are each and engaged by hooking with the first protrusion 55a and the second protrusion 55b provided on both corners of the lower edge of the recess 45. In such an engaging state, the battery device 1 is rotated closer to the mounting portions 44 with contact areas with the two protrusions 55a, 55b as rotation centers.

Accordingly, the second engaging piece 7b of the battery device 1 approaches the first hook piece 61a, the third engaging piece 7c approaches the second hook piece 61b, and the second engaging piece 7b is brought into contact with the first hook piece 61a. The battery device 1 in this state is rotated and pushed into the mounting portions 44, so that the second engaging piece 7b presses and moves the first hook piece 61a toward the connection terminal 56 against a spring force of the coil spring 65. When the second engaging piece 7b hurdles the first hook piece 61a, the third engaging piece 7c is then brought into contact with the second hook piece 61b. When the third engaging piece 7c hurdles the second hook piece 61b, the battery device 1 is completely inserted into the recess 45, and the lower surface 5a as a second surface of the battery device 1 is brought into contact with the bottom surface 45a as a second surface of the mounting portions 44.

As a result, the output terminal 3 of the battery device 1 is connected to the connection terminal 56 of the mounting portions 44. Accordingly, the battery device 1 is electrically connected to the digital video camera 20, and power of the battery device 1 is supplied to the digital video camera 20 from the output terminal 3 through the connection terminal 56. Accordingly, the digital video camera 20 may be operated to photograph a subject and record the subject in a recording medium and to watch photographic information recorded in the recording medium in a display device, for example.

In this case, the first hook piece 61a of the first hook 61 and the first discrimination projection 54a enter the first opening 9a provided between the first engaging piece 7a and the second engaging piece 7b of the first engaging portion 7 of the battery device 1. Similarly, the first hook piece 62a of the second hook 62 and the second discrimination projection 54b enter the first opening 10a provided between the first engaging piece 8a and the second engaging piece 8b of the second engaging portion 8 of the battery device 1. The second hook piece 61b of the first hook 61 enters the second opening 9b provided between the second engaging piece 7b and the third engaging piece 7c of the first engaging portion 7. Similarly, the second hook piece 62b of the second hook 62 enters the second opening 10b provided between the second engaging piece 8b and the third engaging piece 8c of the second engaging portion 8.

Since the first hook piece 61a and the second hook piece 61b are free in this manner, the slide member 60 slides away from the connection terminal 56 by a spring force of the coil spring 65. As a result, as shown in FIG. 9C, the first hook piece 61a is engaged with the second engaging piece 7b and the second hook piece 61b is engaged with the third engaging piece 7c. Similarly, in the second hook 62, the first hook piece 62a is engaged with the second engaging piece 8b and the second hook piece 62b is engaged with the third engaging piece 8c. Accordingly, the battery device 1 is locked by the four hook pieces 61a, 61b, 62a, 62b engaged with the four engaging pieces 7b, 7c, 8b, 8c and fixed and attached to the mounting portions 44.

On the other hand, as shown in FIG. 17, it may be impossible to mount a second battery device 200 commonly used heretofore in the mounting portions 44. Here, the second battery device 200 will be described. FIG. 18 shows a specific example of the second battery device 200. The second battery device 200 differs from the first battery device 1 only in that a first engaging piece 7a of a first engaging portion 7 and a first engaging piece 8a of a second engaging portion 8 are longer in a longitudinal direction Y than those of the first battery device 1 (and accordingly a first opening 203 of the first engaging portion 7 and a first opening 204 of the second engaging portion 8 are shorter corresponding to an increase in lengths of the first engaging piece 7a and the second engaging piece 8a). The second battery device 200 is formed in the same manner as in the first battery device 1 except for that point.

Specifically, in the second battery device 200, portions of reference symbols 201a, 202a indicated by cross hatching in FIG. 18 are formed longer than the two first engaging pieces 7a, 8a of the first battery device 1. The extensions 201a, 202a of the first engaging pieces 201, 202 are set at positions corresponding to the first discrimination projection 54a and the second discrimination projection 54b provided in the mounting portions 44, respectively. Accordingly, the second battery device 200 may not be mounted on the mounting portions 44, since the discrimination projections 54a, 54b are brought into contact with the extensions 201a, 201b of the first engaging pieces 201, 202. First ribs 205, 206 are provided as extending corresponding to the extensions 201a, 202a on extensions 201a, 202a sides of the first engaging pieces 201, 202.

Therefore, when the mounting portions 44 is used for the digital video camera 20, only the first battery device 1 may be used as an exclusive component without allowing use of the second battery device 200. On the other hand, since the first battery device 1 has the first engaging piece 7a and the second engaging piece 8a shorter in the longitudinal direction Y than those of the second battery device 200 and has the first opening 9a and the first opening 10a wider than those of the second battery device 200, the first battery device 1 may be mounted on the digital video camera 20 having mounting portions on which the second battery device 200 may be mounted, and the first battery device 1 may be used as a power source as is.

When the battery device 1 mounted on the mounting portions 44 is removed, the operation projection 66 is pressed as shown in FIG. 9C to allow the slide member 60 to slide toward the connection terminal 56 against a spring force of the coil spring 65. The slide member 60 is moved to a place where the four hook pieces 61a, 61b, 62a, 62b are detached from the four engaging pieces 7b, 7c, 8b, 8c, so that the battery device 1 may be removed. Consequently, the battery device 1 may be removed by raising an edge opposite to the output terminal 3 of the battery device 1 and rotating the battery device 1 with the two first engaging pieces 7a, 8a engaged with the two protrusions 55a, 55b as centers.

FIGS. 10 and 11A show a second example of mounting portions of an electronic apparatus according to an embodiment of the present invention. This mounting portions 74 differs from the mounting portions 44 of the aforementioned example in that a first hook 81 and a second hook 82 are securely fixed in a recess 75 of a rear panel 73 and a stopper member 77 is provided to limit movement of the battery device 1 mounted on a predetermined position of the mounting portions 74. Since the mounting portions is formed in the same manner as in the aforementioned example except that point, the same components as in the aforementioned example are indicated by the same symbols and their repeated description is omitted, and different components are selectively described.

The recess 75 of the rear panel 73 has: a bottom surface 75a as an approximately rectangular second surface; a lower surface 75b having a first surface continuous with one side in a longitudinal direction Y1 of the bottom surface 75a and approximately perpendicular to the bottom surface 75a; a left side surface 75d continuous with one side in a crosswise direction X1 at right angles to the longitudinal direction Y1 of the bottom surface 75a and approximately perpendicular to the bottom surface 75a; and a right side surface 75e continuous with the other side in the crosswise direction X1 of the bottom surface 75a and approximately perpendicular to the bottom surface 75a. The recess 75 for the mounting portions 74 is formed with the bottom surface 75a, the lower surface 75b, and the left and right side surfaces 75d, 75e. The recess 75 is provided in the rear panel 73 with the longitudinal direction Y1 set to be a vertical direction.

The first hook 81 has: a first hook piece 81a placed on a connection terminal 56 side; and a second hook piece 81b placed at a predetermined interval in the longitudinal direction Y1 from the first hook piece 81a. The first hook piece 81a is formed protruding inward from and integrally with the left side surface 75d of the rear panel 73. A first protrusion 55a is provided on a connection terminal 56 side of the first hook piece 81a. Similarly, the second hook 82 has: a first hook piece 82a placed on a connection terminal 56 side; and a second hook piece 82b placed at a predetermined interval in the longitudinal direction Y1 from the first hook piece 82a. The first hook piece 82a is formed protruding inward from and integrally with the right side surface 75e of the rear panel 73. A first protrusion 55b is provided on a connection terminal 56 side of the first hook piece 82a.

The second hook piece 81b of the first hook 81 is formed continuously and integrally with the bottom surface 75a and the left side surface 75d of the recess 75. The second hook piece 82b of the first hook 82 is formed continuously and integrally with the bottom surface 75a and the right side surface 75e of the recess 75. Cast holes 78 for injection molding using a die are formed on the bottom surface 75a for the four hook pieces 81a, 81b, 82a, 82b and the left and right protrusions 55a, 55b, respectively. A second discrimination projection 79 to discriminate a type of the battery device 1 is provided between the second protrusion 55b and an opening 50 for the connection terminal.

The stopper member 77 is placed to be brought into contact with the right side surface 75e on a side opposite to the lower surface 75b of the mounting portions 74. The stopper member 77 has: a stopper 77a protruding toward an upper portion of the battery device 1 mounted on the mounting portions 74 to regulate upward movement in the longitudinal direction Y1 of the battery device 1; and an operation portion 77b continuous with the stopper 77a and protruding forward from the recess 75. The stopper member 77 is energized by an elastic member (not shown) to always protrude forward. At this time, the stopper 77a protrudes toward an upper portion of the battery device 1, so that the battery device 1 is prevented from being moved and dropped from the mounting portions 74. When the operation portion 77b is pressed against an energizing force of the elastic member to move the stopper 77a backward, a surface of the stopper 77a is pressed down to a plane coplanar with the bottom surface 75a. Accordingly, the battery device 1 may be moved in the longitudinal direction Y1.

The battery device 1 may be mounted on and detached from the mounting portions 74 having such a configuration as follows, for example. FIG. 11A is a view describing the rear panel 73 with a front view of the mounting portions 74, FIG. 11B is a view describing a state when insertion of the battery device 1 starts, and FIG. 11C is a view describing a state when insertion of the battery device 1 is completed. In FIGS. 11B and 11C, the three engaging pieces 8a, 8b, 8c of the second engaging portion 8 are engaged with the two hook pieces 82a, 82b of the second hook 82 and the second protrusion 55b in the same manner in which the three engaging pieces 7a, 7b, 7c of the first engaging portion 7 formed symmetrically with the engaging pieces 8a, 8b, 8c are engaged with the two hook pieces 81a, 81b of the first hook 81 and the first protrusion 55a. Therefore, an operation of one set formed with the first engaging portion 7 and others is described here with reference to the drawings, and description of an operation of the other set formed with the second engaging portion 8 and others is omitted.

First, a case of mounting the battery device 1 in the mounting portions 74 will be described. In this case, as shown in FIG. 11B, the lower surface 5a of the battery device 1 is allowed to face the bottom surface 75a to make the lower surface 5a approximately parallel to the bottom surface 75a on an upper side (side opposite to the connection terminal 56) of the recess 75 of the mounting portions 74. The battery device 1 is pressed against an energizing force of the stopper member 77, and the first hook piece 61a of the first hook 61 and the first discrimination projection 54a are inserted into the first opening 9a between the first engaging piece 7a and the second engaging piece 7b of the first engaging portion 7. At the same time, the second hook piece 61b of the first hook 61 is inserted into the second opening 9b between the second engaging piece 7b and the third engaging piece 7c of the first engaging portion 7. Accordingly, the lower surface 5a as a second surface of the battery device 1 is brought into contact with the bottom surface 75a as a second surface of the mounting portions 74.

In this case, as in the aforementioned example, the first hook piece 61a of the first hook 61 and the first discrimination projection 54a enter the first opening 9a provided between the first engaging piece 7a and the second engaging piece 7b of the first engaging portion 7 of the battery device 1. The second hook piece 61b of the first hook 61 enters the second opening 9b provided between the second engaging piece 7b and the third engaging piece 7c of the first engaging portion 7.

Next, the battery device 1 is allowed to slide toward the connection terminal 56. Accordingly, as shown in FIG. 11C, in the first hook 81, the second engaging piece 7b is engaged with the first hook piece 81a and the third engaging piece 7c is engaged with the second hook piece 81b. Similarly, in the second hook 82, the second engaging piece 8b is engaged with the first hook piece 82a and the third engaging piece 8c is engaged with the second hook piece 82b. Accordingly, the battery device 1 is locked by the four hook pieces 81a, 81b, 82a, 82b engaged with the four engaging pieces 7b, 7c, 8b, 8c. At the same time, the stopper member 77 is energized to outside, so that the stopper 77a protrudes toward an upper portion of the battery device 1. This prevents the battery device 1 from being moved in the longitudinal direction Y1 and dropped from the mounting portions 44.

At this time, the output terminal 3 of the battery device 1 is connected to the connection terminal 56 of the mounting portions 74. Accordingly, the battery device 1 is electrically connected to the digital video camera 20, and power of the battery device 1 is supplied to the digital video camera 20 from the output terminal 3 through the connection terminal 56. Accordingly, the digital video camera 20 may be operated to photograph a subject and record the subject in a recording medium and to watch photographic information recorded in the recording medium in a display device, for example.

On the other hand, a second battery device 100 commonly used heretofore is prevented from being mounted on the mounting portions 74, since extensions 101a, 102a present in the second battery device 100 as in the aforementioned example are brought into contact with the discrimination projections 54a, 54b, respectively. Accordingly, when the mounting portions 74 is used for the digital video camera 20, only the first battery device 1 may be used as an exclusive component without allowing use of the second battery device 100. On the other hand, the first battery device 1 may be used as is also in the digital video camera 20 in which the second battery device 100 may be used.

When the battery device 1 mounted on the mounting portions 74 is removed, the operation projection 66 is pressed as shown in FIG. 11C to press down the stopper member 77 against an energizing force of the elastic body. The battery device 1 is allowed to slide to a place where the four engaging pieces 7b, 7c, 8b, 8c are detached from the four hook pieces 81a, 81b, 82a, 82b. Accordingly, the four engaging pieces 7b, 7c, 8b, 8c are disengaged from the four hook pieces 81a, 81b, 82a, 82b, and the battery device 1 may be removed. At this time, the output terminal 3 of the battery device 1 is pulled from the connection terminal 56, and the battery device 1 is electrically disconnected from the digital video camera 20. Consequently, the battery device 1 may be removed by pulling the battery device 1 away from the recess 75.

FIGS. 12A to 12C show a second example of a battery device according to an embodiment of the present invention. The battery device 1A of the second example differs from the first battery device 1 in that the first engaging piece 7a of the first engaging portion 7 of the first battery device 1 shown in FIG. 1B is formed to have a shape identical to and a size equal to those of the first engaging piece 201 of the first engaging portion 7A of the second battery device 200 shown in FIG. 18, and a first rib 205 having a shape identical to and a size equal to those of the first engaging piece is provided on a rear surface of the first engaging piece. Accordingly, there is provided between a first engaging piece 201 and a second engaging piece 7b of a lower case 5A a first opening 203 of which position and size are identical to those of the first opening 203 of the first engaging portion 7A of the second battery device 200. The battery device 1A is formed in the same manner as in the first battery device 1 except for that point.

FIGS. 13A to 13C show a third example of a battery device according to an embodiment of the present invention. The battery device 1B of the third example differs from the first battery device 1 in that the first engaging piece 8a of the second engaging portion 8 of the first battery device 1 shown in FIGS. 1A, 1B is formed to have a shape identical to and a size equal to those of the first engaging piece 202 of the second engaging portion 8A of the second battery device 200 shown in FIG. 18, and a first rib 206 having a shape identical to and a size equal to those of the first engaging piece is provided on a rear surface of the first engaging piece. Accordingly, there is provided between a first engaging piece 202 and a second engaging piece 8b of a lower case 5B a first opening 204 of which position and size are identical to those of the first opening 204 of the first engaging portion 8A of the second battery device 200. The battery device 1B is formed in the same manner as in the first battery device 1 except for that point.

The battery device 1A and the battery device 1B having such configurations may also exhibit the same effect as in the first battery device 1. That is, it is possible to discriminate, in the battery devices 1A, 1B, a type of the battery device applicable to mounting portions of an electronic apparatus. Furthermore, even when multiple imaging devices having mounting portions with different attachment structures have a common basic structure for the mounting portions, the first battery device may be used for different types of such imaging devices and other kinds of an electronic apparatus, and thus the battery device may be effectively used.

FIGS. 14 to 16 show a fourth example of a battery device according to an embodiment of the present invention. The battery device 1C of the fourth example differs from the first battery device 1 in that notches 91a, 91b and notches 92a, 92b entering inward in a crosswise direction X are provided in the first opening 9a and the second opening 9b of the first engaging portion 7 and the first opening 10a and the second opening 10b of the second engaging portion 8 of the first battery device 1 shown in FIGS. 1A and 1B, respectively. In the battery device 1C having such notches 91a, 91b, 92a, 92b in a lower case 5C, swelled portions entering the notches 91a, 91b, 92a, 92b are provided in hook pieces of mounting portions corresponding to the notches 91a, 91b, 92a, 92b, respectively.

The battery device 1C having such a configuration may also exhibit the same effect as in the first battery device 1. That is, it is possible to discriminate, in the battery device 1C, a type of the battery device applicable to mounting portions of an electronic apparatus. Furthermore, even when multiple imaging devices having mounting portions with different structures have a common basic structure for the mounting portions, the first battery device may be used for different types of such imaging devices and other kinds of an electronic apparatus, and thus the battery device may be effectively used.

As described above, according to a battery device, an electronic apparatus, and a battery unit according to embodiments of the present invention, it is possible to discriminate a type of the battery device even when the battery device and the an electronic apparatus have different attachment structures, one battery device may be used for multiple types of an electronic apparatuses, and, on the contrary, one battery device may be used as an exclusive component for one type of an electronic apparatus. Accordingly, undesired use of a battery device may be prevented, and a predetermined battery device may be used for a predetermined type of an electronic apparatus to improve safety. A type of the battery device may be discriminated in multiple stages by changing a length or width of a hook.

The present invention is not limited to the embodiments described above and shown in the drawings, and various modifications may be effected without departing from the gist of the present invention. For example, in the aforementioned example, a battery device according to an embodiment of the present invention is used for a digital video camera as a specific example of an imaging device; however, the battery device may be used not only for a digital video camera, obviously, but also for various other types of an electronic apparatus such as an electronic still camera, a personal computer, an electronic dictionary, a DVD player, and a car navigation system. In the aforementioned example, an example is described where six engaging pieces are provided in a battery device and four hook pieces are provided in mounting portions; however, it is obvious that the number of the engaging pieces is not limited to six and the number of the hook pieces is not limited to four.

It should be understood by those skilled in the art that various modifications, combinations, sub-combinations and alterations may occur depending on design requirements and other factors insofar as they are within the scope of the appended claims or the equivalents thereof.

## Claims

1. A battery device having a first battery device and a second battery device, each including an approximately rectangular parallelepiped battery enclosure incorporating a battery cell; and an output terminal located to expose an output portion of the output terminal in an approximate center of at least a first surface of the battery enclosure and outputs power of the battery cell in a crosswise direction, the battery enclosure comprising:
a second surface approximately perpendicular to the first surface;
a first step surface provided continuously with and approximately parallel to the second surface having a predetermined step on one side of the second surface in the crosswise direction;
a second step surface provided continuously with and approximately parallel to the second surface having a predetermined step on one side of the second surface in the crosswise direction;
a first engaging portion protruding from one side of the second surface with predetermined width and thickness in the crosswise direction;
a second engaging portion protruding from the other side of the second surface with predetermined width and thickness in the crosswise direction;
a first groove formed in the first step surface and the first engaging portion; and
a second groove formed in the second step surface and the second engaging portion, wherein
the first battery device and the second battery device are formed such that a shape of at least one of the first engaging portion and the second engaging portion differs between the first battery device and the second battery device.

2. A battery device according to claim 1, wherein
the first engaging portion and the second engaging portion of the first battery device are formed approximately symmetrical to each other in the crosswise direction, but are formed to differ in shape from the first engaging portion and the second engaging portion of the second battery device.

3. A battery device according to claim 1 or 2, wherein
a plurality of the first engaging portions and a plurality of the second engaging portions are formed at predetermined intervals in a longitudinal direction at right angles to the crosswise direction.

4. A battery device according to claim 1, 2 or 3, wherein
a notch cutting into the second surface is provided in a front portion or a rear portion of at least one of the first engaging portion and the second engaging portion in a longitudinal direction at right angles to the crosswise direction.

5. An electronic apparatus selectively incorporating a first battery device and a second battery device, each including mounting portions on which a battery device is detachably mounted having an approximately rectangular parallelepiped battery enclosure incorporating a battery cell, and a connection terminal which is placed to expose a connection portion in an approximate center of at least a first surface of the mounting portions in a crosswise direction and is detachably connected to an output terminal that outputs power of the battery cell of the battery device, the mounting portion comprising:
a second surface approximately perpendicular to the first surface;
a first hook provided at a predetermined interval from the second surface and detachably engaged with a first engaging portion provided in the battery enclosure; and
a second hook provided at a predetermined interval from the second surface and detachably engaged with a second engaging portion provided in the battery enclosure, wherein
at least one of the first hook and the second hook is formed to be engageable with each of the first engaging portion and the second engaging portion of each of the first battery device and the second battery device formed so that a shape of at least one of the first engaging portion and the second engaging portion differs between the first battery device and the second battery device.

6. An electronic apparatus according to claim 5, wherein
the first hook and the second hook are securely fixed in the mounting portions.

7. An electronic apparatus according to claim 5, wherein
the first hook and the second hook are provided movably on the mounting portions in the longitudinal direction.

8. A battery system comprising:
a battery device having a battery cell and
an electronic apparatus having mounting portions on which the battery device is detachably mounted, wherein
the battery device includes:
an approximately rectangular parallelepiped battery enclosure in which the battery cell is incorporated, and
an output terminal which is placed to expose an output portion in an approximate center in a crosswise direction of at least a battery side first surface of the battery enclosure and outputs power of the battery cell, with the battery enclosure having:
a battery side second surface approximately perpendicular to the battery side first surface,
a first step surface provided continuously with and approximately parallel to the battery side second surface with a predetermined step on one side of the battery side second surface in the crosswise direction,
a second step surface provided continuously with and approximately parallel to the battery side second surface with a predetermined step on the other side of the battery side second surface in the crosswise direction,
a first engaging portion protruding from one side of the battery side second surface with predetermined width and thickness in the crosswise direction,
a second engaging portion protruding from one side of the battery side second surface with predetermined width and thickness to in the crosswise direction,
a first groove formed in the first step surface and the first engaging portion, and
a second groove formed in the second step surface and the second engaging portion, in which the first battery device and the second battery device are formed so that a shape of at least one of the first engaging portion and the second engaging portion differs between the first battery device and the second battery device; and
the electronic apparatus includes:
a first battery device and
a second battery device each of which are selectively mounted, a connection terminal placed to expose a connection portion in an approximate center of at least an electronic apparatus side first surface of the mounting portions in a crosswise direction and is detachably connected to the output terminal, with the mounting portions having:
an electronic apparatus side second surface approximately perpendicular to the electronic apparatus side first surface,
a first hook provided at a predetermined interval from the electronic apparatus side second surface and detachably engaged with a first engaging portion provided in the battery enclosure, and
a second hook provided at a predetermined interval from the electronic apparatus side second surface and detachably engaged with a second engaging portion provided in the battery enclosure, in which at least one of the first hook and the second hook is formed to be engageable with each of the first engaging portion and the second engaging portion of each of the first battery device and the second battery device formed such that a shape of at least one of the first engaging portion and the second engaging portion differs between the first battery device and the second battery device.
